# EUROPEAN PATENT SPECIFICATION

(11) **EP 1 468 806 B1**
(45) Date of publication and mention of the grant of the patent: **05.05.2010**
(21) Application number: 01275058.4
(22) Date of filing: 26.11.2001
(51) Int. Cl.: B29C 45/16, B29C 45/14

(54) **METHOD OF OBTAINING FLANGED, COATED PLASTIC PARTS**
VERFAHREN ZUM ERHALT VON MIT FLANSCH VERSEHENEN BESCHICHTETEN KUNSTSTOFFTEILEN
PROCEDE D'OBTENTION DE PIECES EN PLASTIQUE REVETUES ET A REBORD

(43) Date of publication of application: 20.10.2004
(73) Proprietor: GRUPO ANTOLIN-INGENIERIA, S.A., 09007 Burgos (ES)
(72) Inventor: LE CLAIRE, Bertrand, E-09001 Burgos (ES); GOMEZ MIMBIELA, Javier, E-09007 Burgos (ES); ESCRIBANO ANDRES, Pablo, E-09007 Burgos (ES)
(74) Representative: Capitan Garcia, Maria Nuria
(86) International application number: PCT/ES2001/000456
(87) International publication number: WO 2003/053652

(56) References cited:
- DE-A- 4 127 241
- GB-A- 2 163 993
- US-A- 5 500 169
- US-A- 5 783 287
- US-A- 6 143 227
- PATENT ABSTRACTS OF JAPAN vol. 014, no. 235 (M-0975), 18 Mayo 1990 (1990-05-18) & JP 02 062215 A (KOATSU KAKO KK), 2 Marzo 1990 (1990-03-02)
- PATENT ABSTRACTS OF JAPAN vol. 016, no. 284 (M-1270), 24 Junio 1992 (1992-06-24) & JP 04 073115 A (KIYOUWA KOUGIYOU KK), 9 Marzo 1992 (1992-03-09)

## Description

The invention relates to the obtaining of injected plastic parts in the interior of a mould, which are coated and flanged inside the mould itself during the injection phase.

When a plastic part is coated, for example with a fabric, this coating adapts to the shape of the part, with the profile of the cut in the fabric remaining visible on the sharp edges of the part.

With the aim of rectifying this disadvantage and giving continuity to the surface of the fabric on the visible side of the part, the fabric has a greater surface area than is strictly necessary in order to cover the side of the part that is to be covered, making it possible therefore to pass the surplus part of the said fabric over the sharp edges and thus to join it, by different means or methods, to the unseen side of the part.

In the usual technical terminology, this operation is called flanging.

In the State of the art there are several methods for obtaining flanged, coated plastics parts as the ones disclosed in JP11 291252, JP 04 219220, JP 11 129295.
- JP 11 291252 discloses a skin laminate molding method designed to rovide a skin laminating mold not generating peeling at the skin of a product terminal.
- JP 04219220 discloses an insert mold in which a clearance between a pair of molds need not to be adjusted in insert molding, in which a painting sheet is arranged previously in the molds and painting operation is conducted at the same time as molding operation.
- and finally JP 11 129295 discloses a resin molded article which seeks to prevent spit lines from occurring out pattern on the surface of a resin molded article.

One of the processes used in order to obtain coated plastic parts is the injection of plastic onto the coating. This is the case of our solution, in which the process is divided into five phases:
A.- Placing the coating in the mould.
B.- Preshaping the coating.
C.- Closing the mould.
D.- Injection of the polymer onto the coating.
E.- Release of the coated part.

In this kind of process, and in order to ensure a good finish on the final part, so that neither the cut of the fabric nor the sharp edge of the part is visible, it is necessary to flange the coating over the part.

This operation is carried out after the injection, as another different process outside the injection machine and the mould. It is normally carried out by means of several techniques, among which we can point out:
- Welding of the fabric onto the plastic part using ultrasounds.
- Hot air welding.
- Using adhesive.

Given that this operation is carried out after injection, it involves an increase in the number of tools, and, therefore, in their cost, as well as in operations, the use of skilled labour, longer cycle times, risk of quality defects, etc.

The object of the invention is to provide a process to obtain coated and flanged plastic parts in which the flanging of the coating is carried out inside the injection mould and at the same time as the injection itself, without the need for any tooling in addition to the mould nor for any operations other than the injection process.
This objective is achieved by a process according to claim 1. Preferred embodiments are defined in the dependent claims.

The process according to the invention uses, as with the traditional technique, a mould for plastic injection, set up in an injection machine.

The mould is composed of a fixed part, a mobile part and a frame. The coating, suitably cut in terms of the geometry and development of the figure of the mould, is placed between the frame and the fixed part of the mould is placed. This suitably cut coating will be called "format".

At the start of the injection process, the first part of the mould that moves is the frame, which is to be supported on the fixed part of the mould, with the format thus remaining fixed onto the said fixed part.

In this arrangement, and in accordance with the invention, sufficient separation is left between the surfaces of the frame and of the fixed part so that the format is trapped, while at the same time it can also slide easily.

For this sliding to be guaranteed, the areas where the format comes into contact with the mould in the space between the frame and the fixed part must guarantee that it can slide, based on it being polishing, having a slide treatment, etc.

Following this, the mobile part is moved against the frame in order to close the mould and be able to begin the injection process.

In the injection process, the plastic in a melted state enters into the cavity in the mould for the part, reaching the format in such a way that, due to the injection pressure, the molten material gradually fills the cavity, pushing the coating so that it adapts top the geometry or shape of the said cavity.

The molten plastic gives a shape to the coating depending on the geometry of the cavity, with the flanging of this coating onto the part taking place as it adapts to this cavity.

The flanging takes place due to the specific geometry of the mobile part of he mould and of the frame, which forms another item claimed by the present invention.

Thus, the mobile part has the geometry of half of the cross section of the flanging area of the part to be flanged, while the frame has the geometry of the other half of the cross section of the flanging area of the part to be flanged, so that the front part, the sides and/or perimeter and at least a rear portion of the part to be coated become covered with the coating, without the need for any complementary operation in order to create the said flanging which is different from that of the injection phase.

The accompanying sheets of drawings show cross-section diagrams of the invention, in which the following are represented:
Figure 1 represents the configuration of the mould, the frame and the format.
Figure 2 represents the closure of the frame over the fixed part and the pre-shaping of the format
Figure 3 shows the mobile part of the mould over the frame and fixed part.
Figures 4, 5 and 6 show three successive progressive studies of the entry of the injected polymer.
Figure 7 represents the end of the process, with the mobile part of the mould and the frame separated from the fixed part of the mould
Figure 8 shows the surface treatment areas of the mould and the frame in order to favour the sliding of the format.
Figure 9, finally, is a representation of the flanging area of the assembly, without the inclusion of the plastic part or of the coating. -
Figure 10 shows the flanging of the part at 180 DEG.
Figure 11 shows the flanging of the part at 90 DEG.

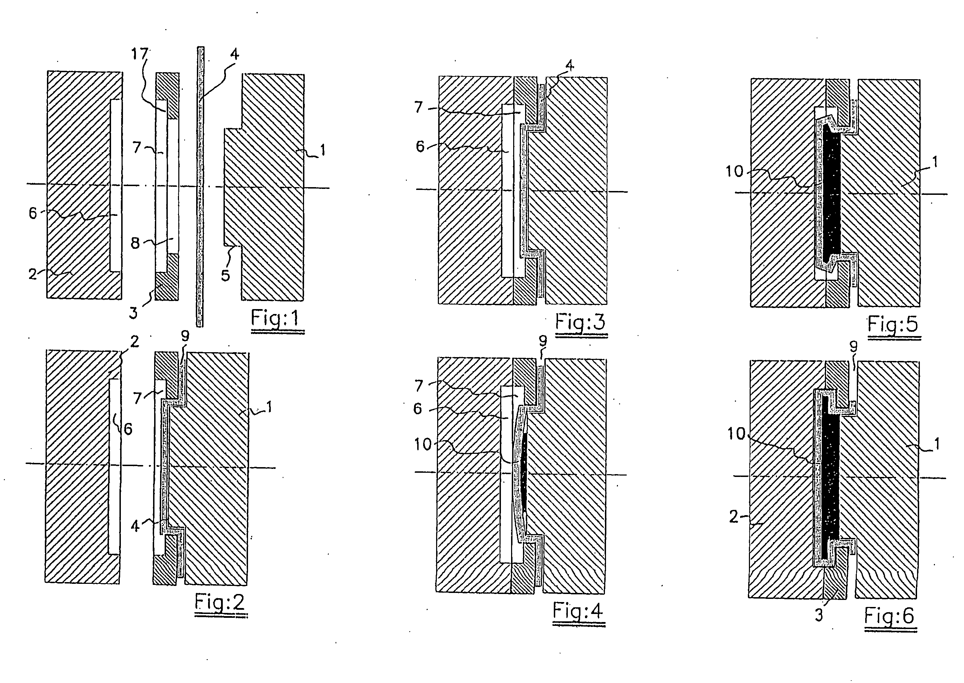

With reference to Fig. 1, we emphasise the fixed part of the mould (1), the mobile part of the mould (2), the frame (3) and the previously positioned format (4), for the start of the process. The fixed part provides one side of the geometry or shape of the part (5). The frame has the geometry of the perimeter of the part and adjusts to the fixed part while leaving a passage through the hole (8). The said frame includes one part of the flanging area (7).

In accordance with Fig. 2, the frame has approached the fixed part (1), pre-shaping the coating (4) and providing a distance (9) between both which allows the sliding of the format and prevents the molten plastic material from leaving.

The closing of the mobile part (2) of the mould onto the said assembly, Fig. 3, allows us to appreciate the establishment of the interior cavity (6, 7), carried out in two halves, one (6) for the mobile part and another (7) for the frame. The coating (4) remains trapped between the frame (3) and the fixed part (1), maintaining the separation distance (9) between the facing surfaces of these latter two parts, and with one portion of the coating having access to the interior of the cavity (6, 7).

The following entry of the injected material (10), in Figs. 4, 5 and 6, allows us to appreciate how, due to this action, the coating becomes adapted to the shape of the cavity (6, 7) by sliding in the space (9) in a gradual manner until the injected plastic completely fills the cavity.

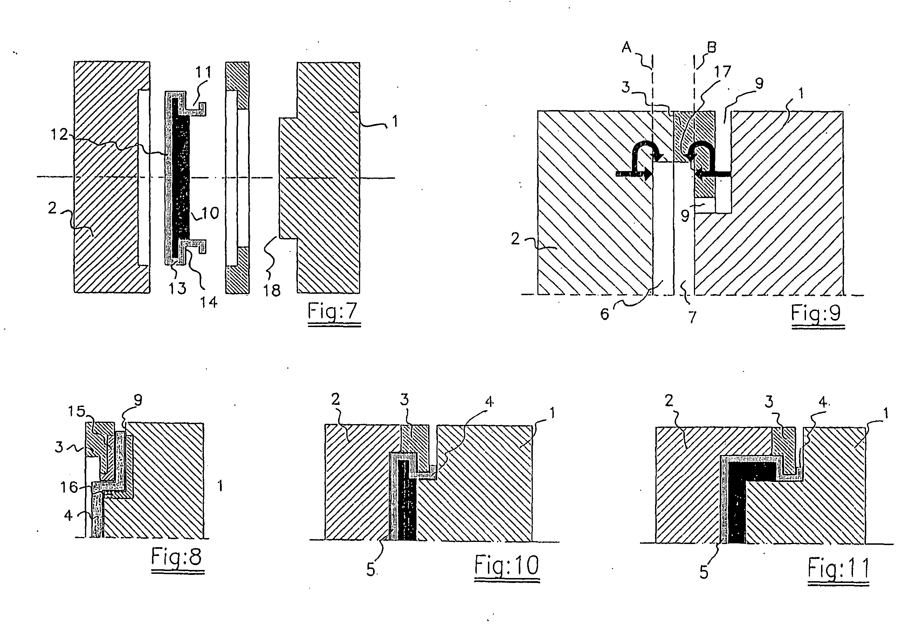

In Fig. 7 we can appreciate how the mobile part (2) and the frame (3) itself are open and separated from the fixed part (1), with the assembly of the plastic part (10) and the coating (4) released from the mould. The coating covers the front surface (12) of the polymer, the sides (13) that form the lateral surfaces of the said polymer, and a portion (14) of the rear surface of the said polymer.

Fig. 8 enables us to observe the treated surfaces (15, 16) of the frame (3) and of the fixed part (1) of the mould, along which the coating has to slide. As stated previously, these surfaces are polished with a treatment that favours sliding or with any other means that assists the sliding of the format.

With regard to Fig. 9, it is possible to appreciate the space (9) for the coating and for it to slide during the injection process, and how this space has direct access tom the cavity (6, 7). The arrows indicate the essential areas that guarantee the flanging of the part in accordance with the diagrams shown.

Figs. 10 and 11 bring us closer to an awareness of the specific geometries or shapes of the possible flanging areas at 180 DEG and 90 DEG respectively, which are perfectly defined following the course of the present invention.

## Claims

1. Procedure to obtain injected plastic parts, coated and flanged, using a fixed part (1) of a mould and another mobile part (2), with the intervention between them of an intermediate frame (3), with a coating (4) being placed between the intermediate frame and the fixed part, the coating being shaped in a first step in which the intermediate frame (3) approaches the fixed part (1), the mobile part (2) then being closed onto the intermediate frame (3) in order to carry out the injection of the plastic material, with the coating (4) being included in the space (9) formed between said intermediate frame and said fixed part and with an interior cavity (6, 7) being formed between said fixed part and said intermediate frame, the cavity comprising two halves, one (6) in the mobile part (2) and the other (7) in the intermediate frame (3), into which interior cavity (6, 7) plastic material is then injected, whereby
the space (9) between the fixed part (1) of the mould and the intermediate frame (3), in which the perimeter of the coating (4) is placed, enables the sliding of the coating inside this space, and at the same time prevents the plastic in molten form from leaving when injection takes place,
the space (9) opening into the interior of the cavity (6, 7) in such a way that its geometry or shape is defined by the cavity half (6), in the mobile part the cavity half (7) in the intermediate frame and a portion (5) of the fixed part (1),
the geometry of the cavity half (6) in the mobile part (2) of the mould corresponding to half of the cross section of the part to be flanged and the geometry of the cavity half (7) in the intermediate frame corresponding to the other half.

2. Procedure to obtain injected plastic parts, coated and flanged, in accordance with claim 1, **characterised in that** the walls (15) of the frame (3) and the walls (16) of the fixed part (1) of the mould, which are facing each other, receiving the coating (4), are suitably prepared in order to guarantee that the said coating will slide on them.

3. Procedure to obtain injected plastic parts, coated and flanged, in accordance with claim 1, **characterised in that** the geometry of the flanging area makes it possible to carry out this operation along the front surface, perimeter and rear unseen surface of the part, which is called 180 DEG flanging.

4. Procedure to obtain injected plastic parts, coated and flanged, in accordance with claim 1, **characterised in that** the geometry of the flanging area makes it possible to flange along the front surface and perimeter of the part, which is called 90 DEG flanging.

## Patentansprüche

1. Verfahren, um gespritzte Kunststoffteile mit Hilfe eines feststehendes Teils (1) einer Form und eines beweglichen Teils (2) und einem dazwischen befindlichen Zwischenrahmen (3) zu beschichten und zu flanschen geschieht mit einer Beschichtung (4), die zwischen den Zwischenrahmen und das feststehende Teil (3) eingebracht wird, wobei in einem ersten Schritt die Beschichtung, bei dem der Zwischenrahmen (3) an das feststehende Teil (1) angenähert wird und das bewegliche Teil (2), das dann den Zwischenrahmen (3) abschließt, geformt wird, um die Einspritzung des Kunststoffmaterials die im Zwischenraum (9) eingeschlossene Beschichtung (4) zwischen dem besagten Zwischenrahmen und dem genannten feststehenden Teil geformt wird und sich eine Innenkavität (6,7) zwischen dem feststehenden Teil und dem besagten Zwischenrahmen bildet, so dass die Kavität aus zwei Hälften, eine (6) im beweglichen Teil und die andere (7) im Zwischenrahmen besteht, in die das Kunststoffmaterial dann eingespritzt wird, wobei
der Raum (9) zwischen dem feststehenden Teil (1) der Form und dem Zwischenrahmen (3), in dem der Beschichtungsumfang platziert ist, das Verschieben der Beschichtung in diesem Raum ermöglicht und gleichzeitig verhindert, dass der geschmolzene Kunststoff während der Einspritzung austritt. Der Raum (9) zum Innern der Kavität (6,7) öffnet sich in der Weise, dass seine Geometrie oder Form von der Kavitätenhälfte (6) im beweglichen Teil und der Kavitätenhälfte (7) im Zwischenrahmen und einem Teil (5) des feststehenden Teils (1) definiert wird.
Die Geometrie der Kavitätenhälfte (6) im beweglichen Teil (2) der Form entspricht mit einer Hälfte des Querschnitts dem zu flanschenden Teil und die Geometrie der Kavitätenhälfte (7) im Zwischenrahmen entspricht der anderen Hälfte.

2. Das Verfahren, um gespritzte Kunststoffteile in Übereinstimmung mit Anspruch 1 zu beschichten und zu flanschen, ist **dadurch gekennzeichnet, dass** die Wände (15) des Rahmens (3) und die Wände (16) des feststehenden Formenteils (1), die sich gegenüber stehen und die Beschichtung (4) aufnehmen, in geeigneter Weise vorbereitet sind, um zu garantieren, dass die besagte Beschichtung sich auf ihnen verschiebt.

3. Verfahren, um gespritzte Kunststoffteile in Übereinstimmung mit Anspruch 1 zu beschichten und zu flanschen ist **dadurch gekennzeichnet, dass** es die Geometrie des Flanschbereichs möglich macht, diese Operation entlang der Vorderseite, des Umfangs und der hinteren, nicht sichtbaren Fläche des Teils durchzuführen und wird als Flanschung 180 DEG bezeichnet.

4. Verfahren, um gespritzte Kunststoffteile in Übereinstimmung mit Anspruch 1 zu beschichten und zu flanschen ist **dadurch gekennzeichnet, dass** es die Geometrie des Flanschbereichs möglich macht, entlang der Vorderseite und des Teileumfangs zu flanschen, was als Flanschung 90 DEG bezeichnet wird.

## Revendications

1. Procédé pour obtenir des pièces en plastique injecté, revêtues et bridées, utilisant une pièce fixe (1) d'un moule et une autre pièce mobile (2), avec l'intervention entre celles-ci d'un châssis intermédiaire (3), avec un revêtement disposé entre le châssis intermédiaire et la pièce fixe, le revêtement étant formé lors d'une première étape dans laquelle le châssis intermédiaire (3) s'approche de la pièce fixe (1), la pièce mobile (2) se fermant alors sur le châssis intermédiaire (3) afin de réaliser l'injection de la matière plastique, le revêtement (4) étant inclus dans l'espace (9) formé entre ledit châssis intermédiaire et ladite pièce fixe et avec une cavité intérieure (6,7) formée entre ladite pièce fixe et ledit châssis intermédiaire, la cavité comprenant deux moitiés, l'une (6) dans la pièce mobile (2) et l'autre (7) dans le châssis intermédiaire (3), dans la cavité intérieure (6, 7) desquelles est alors injectée la matière plastique, de la sorte
l'espace (9) entre la pièce fixe (1) du moule et le châssis intermédiaire (3), dans lequel est disposé le périmètre du revêtement (4), permet le glissement du revêtement à l'intérieur de cet espace, et évite, en même temps, que le plastique sous forme fondue en sorte lors de la mise en oeuvre de l'injection.
l'espace (9) s'ouvrant à l'intérieur de la cavité (6, 7) de telle manière que sa géométrie ou forme est définie par la demi-cavité (6) dans la pièce mobile, la demi-cavité (7) dans le châssis intermédiaire et une partie (5) de la pièce fixe (1),
la géométrie de la demi-cavité (6) dans la pièce mobile (2) du moule correspondant à la moitié de la section transversale de la pièce à brider et la géométrie de la demi-cavité (7) dans le châssis intermédiaire correspondant à l'autre moitié.

2. Procédé pour obtenir des pièces en plastique injecté, revêtues et bridées, selon la revendication 1, **caractérisé en ce que** les parois (15) du châssis (3) et les parois (16) de la pièce fixe (1) du moule, qui sont en regard les unes des autres, et qui reçoivent le revêtement (4) sont préparées de manière appropriée afin de garantir que ledit revêtement glissera sur celles-ci.

3. Procédé pour obtenir des pièces en plastique injecté, revêtues et bridées, selon la revendication 1, **caractérisé en ce que** la géométrie de la zone de bridage favorise la mise en oeuvre de cette opération le long de la surface avant, le périmètre et la surface cachée arrière de la pièce, qui est dite bridage à 180 degrés

4. Procédé pour obtenir des pièces en plastique injecté, revêtues et bridées, selon la revendication 1, **caractérisé en ce que** la géométrie de la zone de bridage favorise le bridage le long de la surface avant et le périmètre de la pièce, qui est dit bridage à 90 degrés.
